Europäisches Patentamt

European Patent Office

Office européen des brevets

(19)

(11) **EP 0 875 021 B1**

(12) **FASCICULE DE BREVET EUROPEEN**

(45) Date de publication et mention
de la délivrance du brevet:
**01.03.2006 Bulletin 2006/09**

(51) Int Cl.:
**G03B 25/02** *(2006.01)*    **G09F 19/14** *(2006.01)*

(21) Numéro de dépôt: **97913248.7**

(22) Date de dépôt: **05.11.1997**

(86) Numéro de dépôt international:
**PCT/FR1997/001976**

(87) Numéro de publication internationale:
**WO 1998/020392 (14.05.1998 Gazette 1998/19)**

(54) **ECRAN STATIQUE POUR IMAGES ANIMEES**

STATISCHER SCHIRM FÜR BEWEGTE BILDER

STATIC SCREEN FOR ANIMATED PICTURES

(84) Etats contractants désignés:
**DE FR GB IT**

(30) Priorité: **07.11.1996 FR 9613577**

(43) Date de publication de la demande:
**04.11.1998 Bulletin 1998/45**

(73) Titulaire: **Guigan, Franck**
**75017 Paris (FR)**

(72) Inventeurs:
• **Guigan, Franck**
**75017 Paris (FR)**
• **Chaumet-Gravelin, Isabelle**
**75014 Paris (FR)**

(74) Mandataire: **Thévenet, Jean-Bruno**
**Cabinet Beau de Loménie**
**158, rue de l'Université**
**75340 Paris Cédex 07 (FR)**

(56) Documents cités:
FR-A- 2 599 519    GB-A- 2 234 363
US-A- 2 833 176    US-A- 3 568 346

Remarques:
Le dossier contient des informations techniques
présentées postérieurement au dépôt de la demande
et ne figurant pas dans le présent fascicule.

EP 0 875 021 B1

**Description**

La présente invention concerne un écran statique pour images animées.

L'on connaît des dispositifs statiques permettant une vue en relief ou animée, constitués d'un ensemble de lentilles ou prismes dit réseau lenticulaire associé à une image dite image primaire constituée de points dits pixels, ledit réseau lenticulaire permettant à l'oeil d'un spectateur de voir des sous-ensembles différents desdits pixels selon son emplacement par rapport au dispositif.

Ces sous-ensembles de pixels constituent chacun une image différente, que l'oeil du spectateur peut voir à partir d'un ou plusieurs emplacements différents.

Dans les dispositions utilisées par ces dispositifs connus, les lentilles ou prismes sont généralement arrangés en colonnes, et les pixels destinés à être vus à travers une colonne de lentilles ou de prismes sont situés en vis-à-vis de la colonne de lentilles ou de prismes, et un ensemble de pixels destinés à pouvoir être vus à travers une lentille ou un prisme a une largeur qui est inférieure ou égale à la largeur de la lentille ou du prisme considéré.

Il est connu par le document GB 2 234 363 un écran pour visualiser des images animées ou stéréoscopiques comportant des fentes ou systèmes optiques associés à une série d'images permettant au spectateur de voir un ensemble de pixels différents selon sa position par rapport à l'écran.

La résolution de l'image vue par le spectateur, qui s'exprime par exemple en pixels par pouce (souvent notée "Dot per Inch" ou DPI) est d'autant plus grande que la largeur de chaque lentille est faible, et il en résulte que la largeur d'un ensemble de pixels vu à travers une lentille a une largeur limitée. Cette faible largeur limite le nombre d'images différentes qui peuvent être vues par le spectateur d'un tel dispositif connu. L'écran proposé permet, selon les modalités de sa mise en oeuvre :

- la vision d'images animées, par la présence possible d'un grand nombre d'images successives,
- la vision d'images en relief,
- la vision d'images qui sont à la fois animées et en relief, avec un écran ne comportant aucune pièce en mouvement, simple de conception et économique à la fabrication.

Le dispositif proposé est un écran tel que défini dans la revendication 1.

Selon d'autres caractéristiques de l'invention :

- ladite image élémentaire s'inscrit dans un rectangle dont la hauteur (*h*) et la largeur (*l*) sont définies par les formules suivantes :

$$h = (S / w)^{0.5} \times [D / (D - F)] / K$$

$$l = (S / w)^{0.5} \times [D / (D - F)] \times K$$

- S étant la surface totale de l'ensemble des lentilles élémentaires 1, projetée sur le plan de l'écran,
- w étant le nombre total de lentilles élémentaires 1,
- D étant la distance entre les yeux du spectateur et le plan contenant les images élémentaires 2,
- F étant la distance entre le plan focal des lentilles élémentaires 1 et le plan contenant les images élémentaires 2,
- et K étant un coefficient librement choisi au dessus de 1 ;
- l'axe dit horizontal est parallèle à l'axe de déplacement du spectateur dans un plan parallèle au plan de l'écran, et le rapport K est égal à la racine carrée du rapport qui existe entre la largeur et la hauteur du rectangle constitué par la projection orthogonale sur l'écran du lieu géométrique des emplacements possibles des yeux du spectateur, lieu dit domaine 4 de visibilité du spectateur ;
- les lentilles élémentaires 1 sont des lentilles en forme d'hexagone régulier, chaque lentille étant accolée sur ses six côtés à une autre lentille, les lignes de lentilles étant inclinées d'un angle de 0,33 radians par rapport à l'axe de déplacement du spectateur dans un plan parallèle au plan de l'écran, et ledit coefficient K étant égal à 2,77 ;
- les lentilles élémentaires sont constituées d'un système dioptrique centré 5 et d'un prisme 6 ;
- les lentilles élémentaires 1 ne sont pas décalées verticalement l'une par rapport à l'autre, et l'angle du prisme 6 dévie les rayons lumineux de telle sorte que les points des deux images élémentaires 2a et 2b correspondantes sont vus par le spectateur à travers les deux lentilles élémentaires 1a et 1b considérées :
- les lentilles élémentaires 1a et 1b juxtaposées horizontalement ne sont pas décalées verticalement l'une par rapport à l'autre, et les axes optiques desdites lentilles élémentaires 1 sont décalés verticalement de telle sorte que les points des deux images élémentaires 2a et 2b correspondantes sont vus par le spectateur à travers les deux lentilles élémentaires 1a et 1b considérées ;

- la lentille élémentaire 1 est munie d'un système d'un prisme 8 déviant les rayons lumineux vers les spectateurs qui ne sont pas situés en vis à vis de ladite lentille élémentaire ;
- chaque image élémentaire 2 comporte, d'un bord latéral à l'autre et dans l'ordre :

(a) un ensemble $C(x,y)P(n)$ de points copiés d'un sous-ensemble d'abscisse $x$ et d'ordonnée $y$ d'une image dite image primaire de rang $n$,
(b) un ensemble $C(x,y) P(n+1)$ de points copiés d'un sous-ensemble d'abscisse x et d'ordonnée y d'une image dite image primaire de rang $n+1$,
(c) et ainsi de suite, l'abscisse $x$ et l'ordonnée $y$ de l'image élémentaire étant respectivement égales à l'abscisse x et l'ordonnée des ensembles $C$,

étant précisé que l'on entend ci-avant et ci-après par images primaires les images que l'on souhaite montrer successivement au spectateur lorsqu'il se déplace le long de l'écran, et que l'on entend ci-avant et ci-après par "rang $n$ d'une image primaire" l'ordre chronologique dans lequel ladite image primaire doit être vue par le spectateur se déplaçant le long de l'écran ;

- chaque image élémentaire 2 comporte, d'un bord latéral à l'autre et dans l'ordre :

(a) un ensemble $C(x,y)P(n)$ de points copiés d'un sous-ensemble d'abscisse x et d'ordonnée $y$ d'une image primaire de rang $n$,
(b) un ensemble $C(x-1,y) P(n+1)$ de points copiés d'un sous-ensemble d'abscisse $x-1$ et d'ordonnée $y$ d'une l'image primaire de rang $n+1$,
(c) et ainsi de suite, l'ordonnée $y$ de l'image élémentaire étant égale à l'ordonnée des ensembles $C$ ;

- les images dites images primaires servant à réaliser les images élémentaires 2 sont créées par une caméra décrivant pendant l'enregistrement desdites images primaires une trajectoire dont l'axe est sensiblement différent d'une parallèle à l'axe de l'objectif de la caméra ;
- la caméra est fixe, et que le sujet à filmer est situé sur un plateau tournant ;
- les lentilles élémentaires 1 sont des lentilles de Fresnel ;
- la face des lentilles élémentaires 1 située du côté du spectateur est plane et confondue avec la face de l'écran située du côté du spectateur ;
- les lentilles élémentaires 1 sont obtenues par moulage de plaques de matériau transparent comprenant chacune un grand nombre de lentilles élémentaires ;
- les lentilles élémentaires comportent une lentille 5 dont une face plane est située du côté opposé au spectateur, cette face étant située dans un plan dit plan unique, identique pour toutes les lentilles élémentaires, et une plaque transparente 12 de caractéristiques optiques différentes est collée aux lentilles 5, le plan de collage étant ledit plan unique, et les images élémentaires étant apposées directement sur la face arrière 3 de ladite plaque transparente 12 ;
- l'écran comporte un dispositif d'acquisition d'images, par exemple un ensemble de capteurs photoélectriques ou une pellicule photographique, en lieu et place de l'ensemble des images élémentaires 3, et est situé sur la face arrière d'un appareil de prises de vues comportant :

(a) un objectif photographique classique 13 monté sur une glissière horizontale 15,
(b) et un obturateur permettant des ouvertures successives multiples de l'objectif.

L'invention sera bien comprise, et d'autres buts, avantages et caractéristiques de celle-ci apparaîtront plus clairement à la lecture de la description qui va suivre, laquelle est illustrée dans les figures 1 à 20.

Figure 1, une vue en perspective d'un dispositif élémentaire selon l'invention, composé d'une lentille élémentaire 1 et d'une image élémentaire 2, vu par un spectateur dont les yeux se déplacent dans un domaine de visibilité 4 selon un axe 9 dit horizontal ;
Figure 2, une vue en perspective de deux lentilles élémentaires 1a et 1b juxtaposées et deux images élémentaires 2a et 2b associées à ces deux lentilles, dans un premier mode de réalisation ;
Figure 3, une vue en perspective d'une lentille élémentaire 1 associée à un prisme 6 et de l'image élémentaire 2 correspondante, dans un second mode de réalisation ;
Figure 4, une vue en perspective d'un ensemble de deux lentilles élémentaires 1a et 1b juxtaposées horizontalement dans ledit second mode de réalisation, associées aux deux images élémentaires 2a et 2b correspondantes ;
Figure 5, une vue en plan d'un ensemble d'images élémentaires 2a à 2e associé à l'ensemble de lentilles élémentaires 1a à 1e de la figure 6 ;

Figure 6, une vue en plan d'un ensemble de lentilles élémentaires carrées 1a à 1e, selon ledit second mode de réalisation, associées à l'ensemble d'images élémentaires 2a à 2e de la figure 5 ;

Figure 7, une vue en plan d'un ensemble d'images élémentaires 2a à 2e associé à l'ensemble de lentilles élémentaires 1a à 1e de la figure 8 ;

Figure 8, une vue en plan d'un ensemble de lentilles élémentaires rectangulaires 1a à 1e, selon ledit second mode de réalisation, associées à l'ensemble d'images élémentaires 2a à 2e de la figure 7;

Figure 9, une vue en plan d'un ensemble images élémentaires 2a à 2e associées à l'ensemble de lentilles élémentaires carrées 1a à 1e assemblées selon un axe incliné de la figure 10;

Figure 10, une vue en plan d'un ensemble de lentilles élémentaires carrées 1a à 1e assemblées selon un damier incliné par rapport à l'horizontale, associées à l'ensemble d'images élémentaires 2a à 2e de la figure 9;

Figure 11, une vue en perspective d'un ensemble de lentilles élémentaires 1a, 1b, 1c et suivantes, dont la face située du côté du spectateur est plane, associées à un ensemble d'images élémentaires imprimées sur un support plane 3, et fixé à ce support par des ergots 11a, 11bn 11c et suivants;

Figure 12, une vue en perspective d'un ensemble de lentilles élémentaires hexagonales 1a, 1b, 1c et suivantes, dont la face située du côté opposé au spectateur est plane et collée sur une plaque 12 dont la face arrière située dans le plan 3 reçoit directement l'impression des images élémentaires;

Figure 13, une vue en plan d'un ensemble de lentilles élémentaires 1a, 1b et suivantes triangulaires et des images élémentaires 2a, 2b et suivantes qui leur sont associées;

Figure 14, une vue en plan d'un ensemble de lentilles élémentaires 1a, 1b et suivantes rectangulaires et des images élémentaires 2a, 2b et suivantes qui leur sont associées;

Figure 15 et Figure 16, deux vues en plan de deux ensembles de lentilles élémentaires 1a, 1b et suivantes hexagonales et des images élémentaires 2a, 2b et suivantes qui leur sont associées;

Figure 17, une vue en élévation d'un ensemble de lentilles élémentaires 1 associées à des prismes 8 et à des images élémentaires situées dans un plan 3;

Figure 18, une vue en élévation d'un écran 5 selon l'invention, de forme concave;

Figure 19, une vue en élévation d'un écran 5 selon l'invention, de forme convexe;

Figure 20, une vue en perspective d'un appareil de prises de vues comportant un écran selon l'invention.

L'on appelle «pixel» un point d'une image, caractérisé uniquement par sa couleur et sa luminosité, une image élémentaire étant constituée d'un ensemble de pixels.

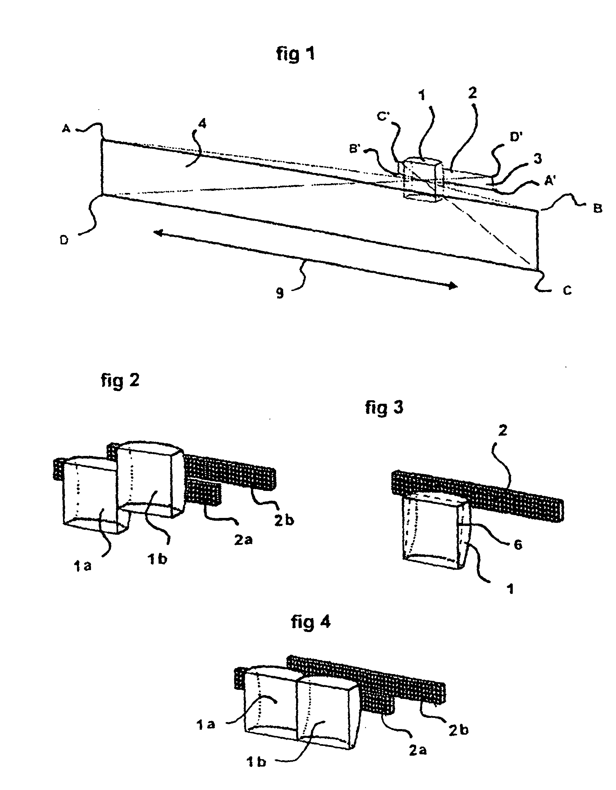

La figure 1 montre une vue en perspective d'une lentille élémentaire, d'une image élémentaire 2 et d'un domaine de visibilité 4 dans lequel les yeux du spectateur peuvent se déplacer selon un axe 9.

Le domaine de visibilité est un rectangle ABCD, par exemple parce que le spectateur est un piéton se déplacant sur un trottoir. Le haut de ce rectangle correspond à la hauteur des yeux des spectateurs les plus grands et le bas à celle des spectateurs les plus petits.

Sur le plan 3 situé derrière la lentille, à une distance de cette dernière que l'homme de l'art sait calculer, l'ensemble des points que les yeux de spectateurs peuvent voir nettement est aussi un rectangle, A'B'C'D'.

Ce rectangle est plus large que haut, car le rectangle ABCD dont il est homothétique est plus large que haut, la variation de taille des spectateurs étant plus faible que la longueur de leur trajet pendant laquelle il est souhaitable qu'ils puissent voir l'écran.

Ainsi, la forme de l'image élémentaire 2 n'est pas identique à la projection de ladite lentille élémentaire 1 sur le plan 3, mais au contraire d'une hauteur inférieure à la projection de ladite lentille élémentaire 1 sur ce plan 3, et d'une largeur supérieure à la projection de ladite lentille élémentaire 1 sur ce plan 3, ce qui a pour effet qu'une partie de l'image élémentaire est située en vis à vis d'une partie d'une lentille élémentaire qui serait juxtaposée à la lentille élémentaire 1 considérée,

Plus l'on souhaite que cette longueur de trajet le long de l'axe 9 soit longue, plus il faut que le rectangle A'B'C'D', qui est l'enveloppe de l'image élémentaire 2, soit étiré en largeur. La dimension des lentilles, par contre, doit être la plus petite possible pour que la résolution de l'écran soit la meilleure possible (on appelle résolution d'un écran le nombre de pixels par unité de surface). En apparence pour le spectateur, chaque lentille constitue un pixel de l'image qu'il voit lorsqu'il est situé à un emplacement donné, et la résolution est donc la meilleure lorsque les lentilles sont les plus petites possibles. L'un des objectifs de l'invention est de pouvoir utiliser des images élémentaires qui soient de grande largeur alors que les lentilles restent de petites dimensions, et particulièrement des images élémentaires qui soient plus larges que les lentilles.

En diminuant la distance focale des lentilles, l'on pourrait aussi diminuer la largeur des images élémentaires, mais, à résolution égale de cette image élémentaire, le nombre de pixels juxtaposés dans l'image élémentaire serait inférieur. L'un des objectifs est au contraire d'avoir le plus grand nombre de pixels juxtaposés dans chaque image élémentaire, pour que le spectateur puisse voir un grand nombre d'images différentes lors de son déplacement selon l'axe 9. Ce grand nombre d'images visibles selon la position du spectateur a en effet pour avantage de permettre une animation des images perçues par le spectateur lors de son déplacement selon l'axe 9, comme au cinéma, et aussi de réaliser des images en relief si deux images visibles de deux points légèrement décalés selon un axe horizontal correspondent à deux vues de la même scène correspondant l'une à la vue destinée à un oeil et l'autre à celle destinée à l'autre oeil.

Le fait que les images élémentaires soient plus larges que les lentilles empêche de juxtaposer les lentilles élémentaires et les images élémentaires selon le même axe horizontal, car si on le faisait, les images élémentaires associées à deux lentilles juxtaposées se chevaucheraient.

La figure 2 montre comment l'on peut décaler vers le haut chaque image élémentaire 2 par rapport à sa voisine immédiate, et décaler également chaque lentille élémentaire 1 par rapport à sa voisine immédiate.

Pour la clarté de l'exposé, l'on a utilisé ici les mots hauteur et largeur. Il est important de noter que ces mots ne font pas référence aux références terrestres, et que l'on doit, dans ce qui précède et ce qui suit, entendre par largeur la dimension dans le sens de l'axe de déplacement 9 du spectateur, et par hauteur la dimension selon un axe perpendiculaire à ce premier axe, situé dans un plan parallèle à celui de l'écran.

Les images élémentaires 2a et 2b qui sont associées aux lentilles élémentaires carrées 1a et 1b illustrées par la figure 2 sont les plus grandes possibles lorsque leur hauteur est égale au décalage vertical entre deux lentilles adjacentes, et leur surface égale à celle des lentilles.

D'une façon générale, pour que les images élémentaires se juxtaposent en utilisant toute la surface disponible, la règle à respecter, pour un spectateur situé à une distance infinie de l'écran, est que les images élémentaires s'inscrivent chacune dans un rectangle dont :

- la hauteur ($h_0$) est égale à la racine carrée de la surface d'une lentille élémentaire divisée par un coefficient $K$ librement choisi :

$$h_0 = s^{0.5} / K$$

- la largeur ($l_0$) est égale à la racine carrée de la surface d'une lentille élémentaire multipliée par ledit coefficient $K$ librement choisi :

$$l_0 = s^{0.5} \times K$$

L'on entend ci-avant et ci-après par surface ($s$) d'une lentille élémentaire la surface ($S$) de l'écran divisée par le nombre ($w$) de lentilles élémentaires qui le composent :

$$s = S / w$$

Le rapport $K$ est le meilleur possible lorsqu'il est égal à la racine carrée du rapport qui existe entre la largeur ($L$) et la hauteur ($H$) du rectangle constitué par la projection orthogonale sur l'écran du domaine 4 dit domaine de visibilité du spectateur, ce dernier étant défini comme étant l'ensemble des points où se situent les yeux des spectateurs à l'attention de qui l'on a disposé l'écran :

$$K = (H \times L)^{0.5}$$

Il est possible d'utiliser des coefficients $K$ très grands, afin d'obtenir un très grand nombre d'images visibles par le spectateur lors de son déplacement le long de l'écran. La limite est atteinte lorsque la hauteur d'une image élémentaire est égale à un pixel imprimable sur l'image élémentaire par le dispositif de reproduction retenu. Si le moyen de reproduction retenu est la photographie, les pixels peuvent être très petits, mais les performances des imprimantes d'ordinateurs sont largement inférieures.

Lorsque l'image élémentaire a plusieurs pixels de haut, l'on peut soit juxtaposer verticalement dans l'image élémentaire des pixels identiques, ce qui augmente la profondeur de champ du dispositif, les images restant vues nettement par les spectateurs même lorsqu'ils se rapprochent ou s'éloignent de la distance optimale de vision de l'écran prévue par l'homme de l'art. Cela aussi pour effet de diminuer l'effet de la différence de parallaxe qui existe lorsqu'un spectateur se rapproche ou s'éloigne de l'écran : lorsqu'il se rapproche, il voit à travers les lentilles du haut de l'écran des portions d'images élémentaires situées sensiblement plus haut que celles qu'il voit lorsqu'il est plus loin, et symétriquement, il voit à travers les lentilles du bas de l'écran des portions d'images élémentaires situées sensiblement plus bas que celles qu'il voit lorsqu'il est plus loin. Si les images élémentaires sont constituées de lignes identiques, les images vues de près et de loin seront identiques, jusqu'à une certaine limite toutefois que l'homme de l'art peut aisément calculer.

L'on peut aussi utiliser des lignes différentes pour constituer les images élémentaires ; les spectateurs voient dans ce cas des images différentes lorsqu'ils se déplacent dans un plan parallèle au plan de l'écran, perpendiculairement à l'axe de déplacement 9. Par exemple, lorsque l'écran selon l'invention est apposé sur la paroi d'une cage d'ascenseur, l'axe de déplacement 9 est vertical par rapport à la terre, et les lignes de chaque image élémentaire 2 sont elles aussi verticales par rapport à la terre. Les deux yeux du passager de l'ascenseur voient deux images différentes. Dans ce cas, l'impression de relief peut être est procurée par la différence entre ces deux lignes, tandis que l'animation est fournie par le déplacement vertical de l'ascenseur.

La figure 3 montre un second mode de réalisation de l'invention. Pour faire correspondre au domaine de visibilité du spectateur une image élémentaire 2 qui est décalée en hauteur par rapport à ladite lentille élémentaire 1, cette dernière peut être associée avec un prisme 6 à la lentille 1. L'on peut aussi considérer, ce qui revient au même, que l'on a simplement découpé la lentille élémentaire 1 sans choisir pour centre du carré son axe optique, c'est à dire que l'on a juxtaposé horizontalement deux lentilles élémentaires 1a et 1b dont les projections sur le plan de l'écran sont alignées horizontalement, mais dont les axes optiques sont décalés verticalement de la hauteur d'une image élémentaire 2. L'avantage de ce second mode de réalisation est que l'écran est constitué de lignes de lentilles horizontales, ce qui offre un double avantage :

- l'on peut utiliser pour la réalisation des images élémentaires des points qui sont issus de la même ligne d'une image "primaire", étant précisé que l'on entend ci-avant et ci-après par "image primaire" une image qui doit être vue par le spectateur lorsqu'il est dans une position fixe par rapport à l'écran, et cela rend plus facile la réalisation d'images élémentaires à partir d'images primaires produites par un ordinateur, puisque les images produites par un ordinateur sont généralement constituées de lignes et de colonnes,
- et la vision des lignes horizontales, fréquentes dans la réalisation des affiches publicitaires en particulier, est meilleure.

La figure 4 montre la juxtaposition de deux lentilles 1a et 1b dans ce second mode de réalisation de l'invention.

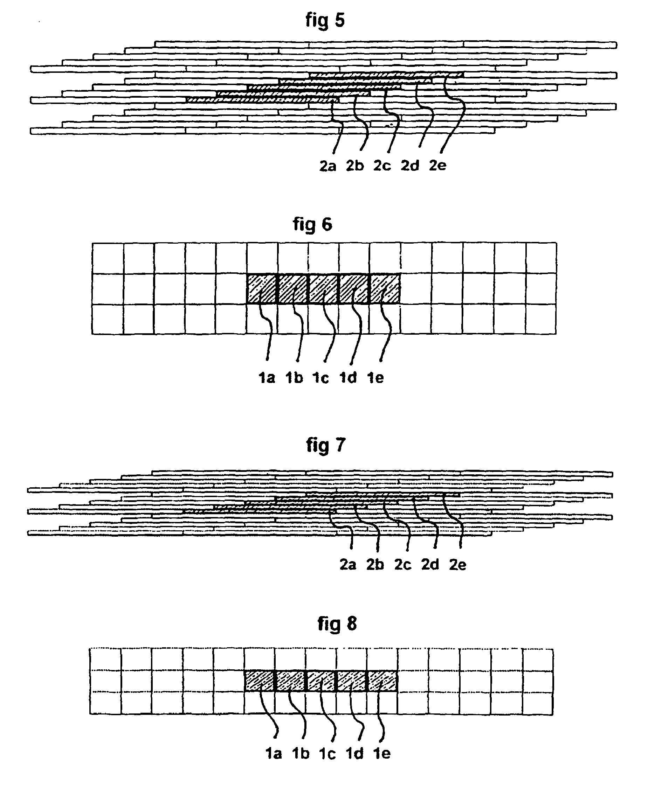

La figure 5 et la figure 6 illustrent l'association d'images élémentaires rectangulaires 2a, 2b, 2c, 2d et 2e (figure 5) avec des lentilles carrées 1a, 1b, 1c, 1d et 1e selon ledit second mode de réalisation de l'invention (figure 6).

La figure 7 et la figure 8 illustrent l'association d'images élémentaires rectangulaires 2a, 2b, 2c, 2d et 2e (figure 7) avec des lentilles rectangulaires 1a, 1b, 1c, 1d et 1e selon ledit second mode de réalisation de l'invention (figure 8).

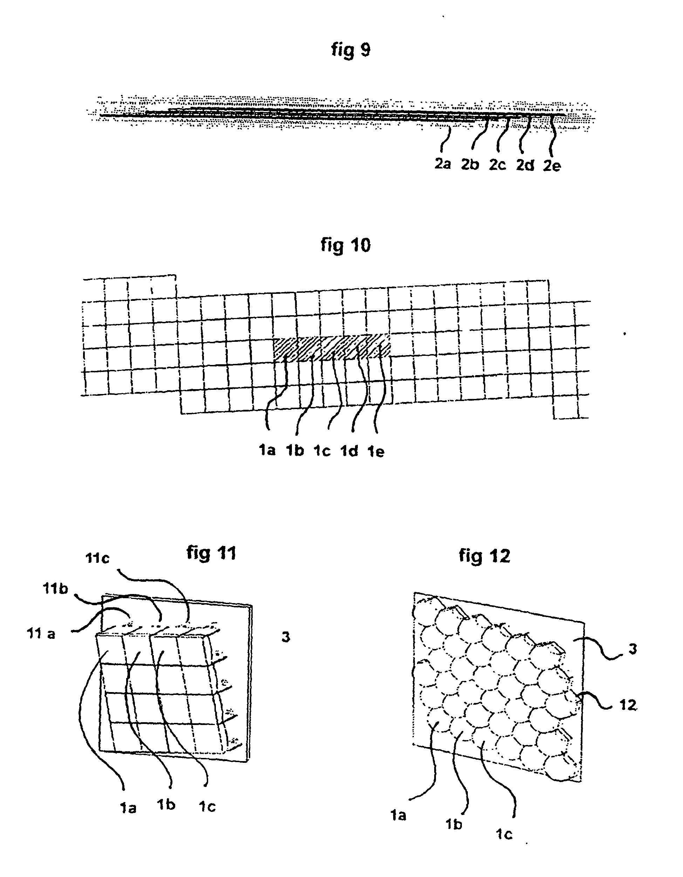

La figure 9 et la figure 10 reprennent le premier mode de réalisation de l'invention, dans lequel les lentilles élémentaires ne comportent pas de prisme et sont des dispositifs optiques centrés dont l'axe optique est au centre dudit dispositif, et illustrent l'association d'images élémentaires rectangulaires 2a, 2b, 2c, 2d et 2e (figure 8) avec des lentilles carrées 1a, 1b, 1c, 1d et 1e (figure 9). Pour obtenir un décalage vertical d'une lentille à sa voisine, l'on a ici choisi de disposer en damier des lentilles élémentaires carrées dont les côtés ne sont ni parallèles ni orthogonaux à l'axe de déplacement 9 et aux bords des images élémentaires.

Les figure 11 et 12 illustrent deux modes de fabrication d'écrans utilisant de telles lentilles. Dans les deux cas, les lentilles sont obtenues par moulage de plaques de matériau transparent comprenant chacune un grand nombre de lentilles élémentaires,

Dans la figure 11, la face des lentilles élémentaires située du côté du spectateur est plane et confondue avec la face de l'écran située du côté du spectateur. Cela a pour avantage de simplifier la gestion des reflets sur cette face qui peut recevoir de l'éclairage naturel, et facilite aussi le nettoyage. La plaque de lentilles élémentaires comporte des ergots 11a, 11b et 11c coopérant avec des fentes pratiquées dans le support 3 sur lequel sont imprimées les images élémentaires, afin d'assurer un bon référencement physique entre les lentilles élémentaires et ledit support 3.

Dans la figure 12, les lentilles élémentaires 1a, 1b, 1c et suivantes sont constituées d'un système optique centré 5 dont la face située du côté opposé au spectateur est plane, et d'une plaque transparente 12 ayant un indice de réfraction différent de celui de la lentille. Cette disposition offre de meilleures caractéristiques optiques, puisque les rayons les plus parallèles entre eux sont ceux situés du côté du spectateur. La face plane de toutes les lentilles est située dans un plan dit plan unique, identique pour toutes les lentilles élémentaires, et la plaque transparente 12 est collée sur ce plan. Les images élémentaires sont imprimées directement sur le plan 3 de la face arrière de ladite plaque transparente 12. Cet ensemble de deux matériaux transparents peut être rigide ou de préférence souple pour pouvoir prendre des formes diverses et/ou pouvoir être imprimé par de nombreuses imprimantes du commerce. Ce mode de réalisation est particulièrement intéressant lorsque l'on souhaite utiliser des lentilles de toutes petites dimensions, par exemple inscrites dans un cercle de 0.5 à 2 mm de diamètre, pour lesquelles il est souhaitable qu'elles aient une focale très faible.

Dans un autre mode de réalisation non représenté, les lentilles élémentaires peuvent bien évidemment être des lentilles de Fresnel. L'avantage est alors le faible encombrement de l'ensemble.

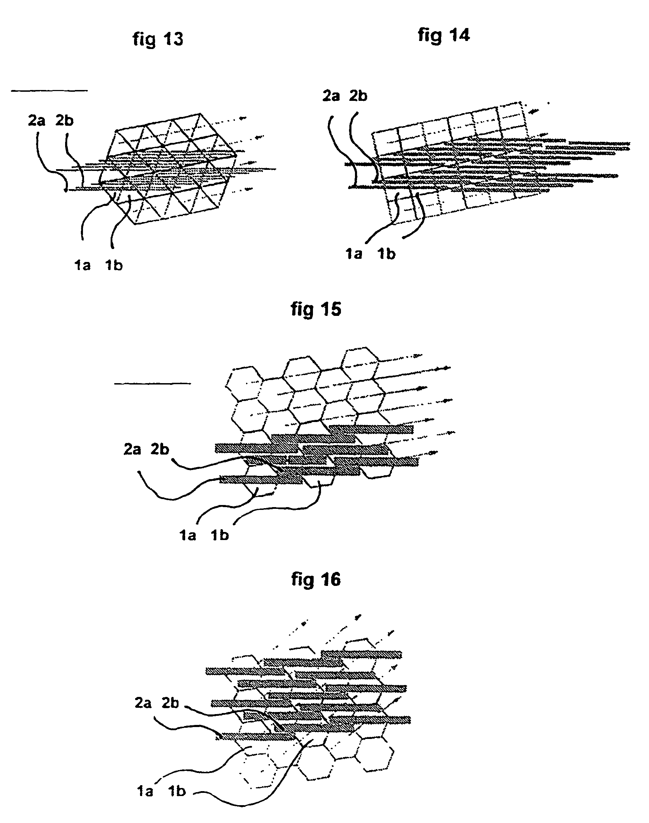

Les figures 13, 14, 15 et 16 illustrent différentes formes de lentilles élémentaires 1 et d'images élémentaires 2 polygonales qui leur sont associées. Les trois types de polygones préférés sont les triangles, les rectangles et les hexagones, réguliers ou non. Le polygone le plus intéressant est l'hexagone régulier car c'est celui qui offre le rapport le plus élevé entre surface utile de la lentille et distance entre l'axe optique et le point de la lentille le plus éloigné de cet axe, donc les meilleures performances optiques, en particulier pour ce qui concerne la profondeur de champ du dispositif. Cette disposition est aussi celle qui permet de disposer le plus grand nombre de lentilles par unité de surface d'écran.

Les lentilles élémentaires étant accolées les unes aux autres, ce qui signifie que chacun des six côtés d'une lentille élémentaire est confondu avec le côté d'une autre lentille, une solution préférée consiste à incliner par rapport à l'axe de déplacement 9 du spectateur une ligne de lentilles élémentaires 1 d'un angle de 0.333 radians et à utiliser un coefficient K égal à 2,77. Chaque image élémentaire 2 a ainsi une grande surface.

Cette disposition a fait l'objet d'un test réussi avec des lentilles hexagonales ayant chacune une surface d'environ 140mm$^2$, et donc des images élémentaires d'une hauteur de 32,8 mm et d'une largeur de 4,27 mm. La focale de 31 mm des lentilles permet une vision efficace d'un pixel de l'écran tout au long d'un mouvement du spectateur le long de l'axe de déplacement 9 du spectateur pour un déplacement total représentant un angle de 0,97 radians entre la droite allant de la lentille à la position du spectateur au début du parcours et la droite allant de la lentille à la position du spectateur à la fin du parcours.

La figure 14, qui correspond au mode de réalisation de la figure 10, offre l'avantage qu'un même ensemble de lentilles peut être utilisé pour réaliser des écrans qui, selon les images élémentaires utilisées, peuvent être disposés en format horizontal (paysage) ou vertical (portrait).

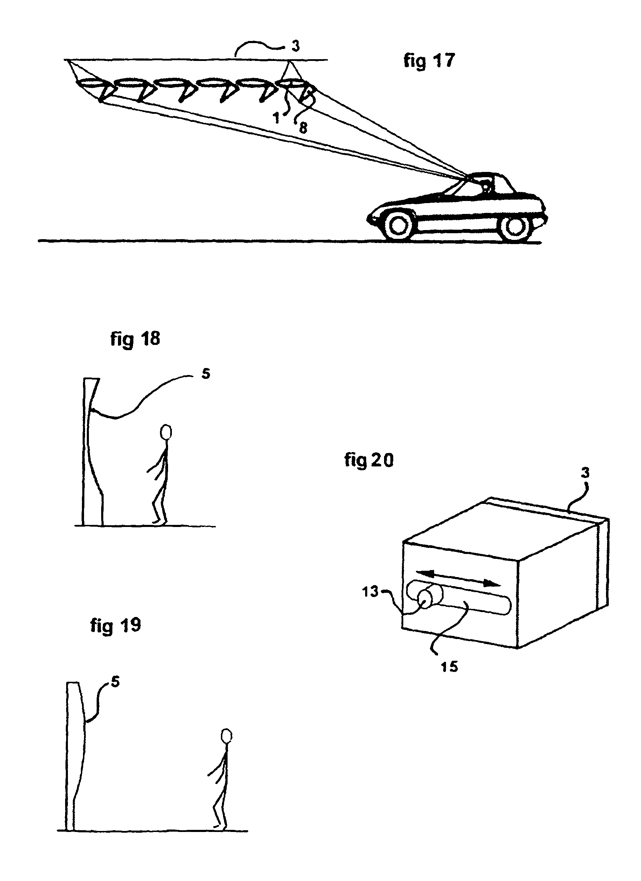

La figure 17 illustrent un mode de réalisation particulier de l'invention, qui permet de réaliser des écrans qui ne sont pas situés dans un plan perpendiculaire aux rayons lumineux destinés aux spectateurs. Il suffit pour résoudre ce problème de disposer devant chaque lentille élémentaire un prisme 8 déviant les rayons lumineux vers les spectateurs.

Cette correction d'angle peut aussi être utilisée pour résoudre les problèmes liés à la différence de parallaxe qui existe entre le haut et le bas d'un écran de grandes dimensions. Il faut dans ce cas (non représenté) disposer dans le haut de l'écran des prismes déviant les rayons lumineux vers le bas, et symétriquement dans le bas de l'écran des prismes déviant les rayons lumineux vers le haut. Une correction inverse peut être obtenue en disposant dans le haut de l'écran des prismes déviant les rayons lumineux vers le haut, et symétriquement dans le bas de l'écran des prismes déviant les rayons lumineux vers le bas, par exemple si les spectateurs sont plus loin que prévu lors du calcul de l'ensemble des images élémentaires.

Pour résoudre ces problèmes de parallaxe, il est également possible, comme cela est illustré par les figures 18 et 19, de courber les écrans 5 soit pour les rendre concaves dans le sens vertical (pour des observateurs situés plus près que prévu), ou pour les rendre convexes dans le sens vertical (pour des observateurs situés plus loin).

Mais la meilleure façon de corriger la différence de parallaxe consiste à agrandir l'image constituée par l'ensemble des images élémentaires.

Cet agrandissement est fonction :

- de la distance (*F*) du plan focal des lentilles élémentaires 1 au plan 3 contenant les images élémentaires,
- et de la distance (*D*) entre le spectateur et ledit plan 3 contenant les images élémentaires.

Les hauteur (*h*) et largeur (*l*) optimales des images sources sont calculées par la formules suivantes :

$$h = h_0 \times (D / (D-F))$$

$$l = l_0 \times (D / (D-F))$$

soit, en reprenant les valeurs de ($h_0$) et ($h_0$) calculées précédemment :

$$h = (S / w)^{0.5} \times [D/(D - F)] / K$$

$$l = (S / w)^{0.5} \times [D/(D - F)] \times K$$

et en exprimant *K* en fonction de la largeur *L* et de la hauteur *H* du domaine de visibilité 4 :

$$h = (S / w)^{0.5} \times [D / (D - F)] / (H \times L)^{0.5}$$

$$l = (S / w)^{0.5} \times [D / (D - F)] \times (H \times L)^{0.5}$$

Une autre façon de corriger la différence de parallaxe, qui peut être mise en oeuvre simultanément avec celles qui viennent d'être exposées consiste à disposer entre l'ensemble des lentilles élémentaires 1 et le spectateur une lentille convergente ou divergente unique, recouvrant la totalité de la surface de l'écran (non représenté). Idéalement, cette lentille unique est une lentille de Fresnel.

Ladite lentille unique divergente a pour effet de

- diminuer la surface apparente de chaque lentille élémentaire, et donc d'augmenter la résolution apparente de l'écran ,
- diminuer l'effet de la variation de distance du spectateur par rapport à l'écran, pour ce qui concerne l'erreur de parallaxe,
- et d'éloigner du spectateur l'apparence du sujet représenté. Ladite lentille unique convergente a pour effet de
- augmenter la surface apparente de chaque lentille élémentaire, et donc de diminuer la résolution apparente de l'écran ,
- augmenter l'effet de la variation de distance du spectateur par rapport à l'écran, pour ce qui concerne l'erreur de parallaxe,
- et de rapprocher du spectateur l'apparence du sujet représenté.

Les images élémentaires peuvent être obtenues par le calcul, comme cela est exposé ci-après.

Pour des écrans de petites dimensions, dont toutes les lentilles sont vues simultanément par le spectateur lors de son déplacement le long de l'écran, chaque image élémentaire comporte, d'un bord latéral à l'autre et dans l'ordre :

(a) un ensemble *C(x,y)P(n)* de points copiés d'un sous-ensemble d'abscisse x et d'ordonnée *y* de l'image primaire de rang *n,*
(b) un ensemble *C(x,y) P(n+1)* de points copiés d'un sous-ensemble d'abscisse x et d'ordonnée *y* de l'image primaire de rang *n+1,*
(c) et ainsi de suite, l'abscisse x et l'ordonnée y de l'image élémentaire étant respectivement égales à l'abscisse x et l'ordonnée des ensembles *C* ;

L'on entend ci-avant et ci-après par "rang *n* d'une image primaire" l'ordre chronologique dans lequel ladite image primaire doit être vue par le spectateur se déplaçant le long de l'écran.

Pour des écrans de très grande largeur, dont seulement une partie des lentilles sont vues simultanément par le spectateur lors de son déplacement le long de l'écran, il peut être envisagé de réaliser une séquence de très nombreuses images qui apparaîtront successivement pendant un long déplacement du spectateur. Dans ce cas, chaque image élémentaire comporte, d'un bord latéral à l'autre et dans l'ordre :

(a) un ensemble *C(x,y)P(n)* de points copiés d'un sous-ensemble d'abscisse x et d'ordonnée *y* de l'image primaire de rang *n,*
(b) un ensemble *C(x-1,y) P(n+1)* de points copiés d'un sous-ensemble d'abscisse *x-1* et d'ordonnée *y* de l'image primaire de rang *n+1,*
(c) et ainsi de suite, l'ordonnée y de l'image élémentaire étant égale à l'ordonnée des ensembles C ;

Ici aussi, l'on entend par "rang *n* d'une image primaire" l'ordre chronologique dans lequel ladite image primaire doit être vue par le spectateur se déplaçant le long de l'écran.

Cette règle peut être appliquée aussi bien en ne considérant qu'une partie de chacune des images primaires afin de la recadrer.

Il est également possible de diminuer ou d'augmenter le nombre de pixels différents appartenant à une même ligne d'une image élémentaire :

- un pixel peut être répété un certain nombre de fois, afin de diminuer le rythme de succession des images pour un spectateur se déplaçant le long de l'écran, ou afin de diminuer l'impression de relief visible par le spectateur.

- un certain nombre de pixels peuvent au contraire être supprimés, afin d'augmenter le rythme de succession des images pour un spectateur se déplaçant le long de l'écran, ou afin d'augmenter l'impression de relief visible par le spectateur.

Pour obtenir une séquence d'images qui sera restituée au spectateur par un écran selon l'invention, de nombreuses méthodes peuvent être utilisées dont la création d'images par ordinateur. L'une des méthodes préférées consiste à ce que les images dites images primaires servant à réaliser les images élémentaires sont créées par une caméra décrivant pendant l'enregistrement une trajectoire dont l'axe est sensiblement différent d'une parallèle à l'axe de l'objectif de la caméra, par exemple perpendiculaire à cet axe. Ainsi, deux images successives de la même scène sont prises à partir de points de vue différents et le spectateur a la vision du relief. De plus, s'il existe des évolutions de la scène pendant le tournage, ces évolutions sont restituées lorsque le spectateur se déplace le long de l'écran, et il a l'impression du cinéma. Le fait de confondre ainsi deux axes de mesure : le déplacement latéral et le temps, a pour conséquence de nombreuses anomalies. Par exemple, un objet se déplaçant dans le sens de déplacement de la caméra apparaît plus loin qu'il ne l'est, tandis qu'un objet se déplaçant dans le sens opposé apparaît plus près. L'homme de l'art peut utiliser ces anomalies pour réaliser des effets spéciaux.

Il est à noter que le déplacement du spectateur dans une direction le long de l'écran lui permet de voir successivement les images du film dans un sens, tandis que l'arrêt du spectateur lui permettra un arrêt sur une image primaire, et son mouvement opposé provoquera le déroulement des images du film dans l'autre sens. Des écrans selon l'invention sont particulièrement utiles, par exemple aux sportifs qui veulent étudier leur mouvement image par image, ou aux ingénieurs qui souhaitent analyser un mouvement rapide ou complexe.

Il est aussi possible de réaliser de telles images avec une caméra fixe et une scène en mouvement. L'un des moyens les plus pratiques (non représenté), consiste à disposer l'objet ou la personne à filmer sur un plateau circulaire, tournant autour d'un axe vertical.

Les performances des ordinateurs de bureau sont suffisantes pour calculer rapidement les images élémentaires à partir d'une série d'images dites primaires soit calculées par ordinateur soit obtenues par une caméra ou par un appareil photo (ces appareils de prise de vues sont avantageusement de type numérique).

Il est aussi possible de réaliser les images élémentaires directement, sans aucun calcul avec un appareil photo spécifique illustré par la figure 20.

La pellicule photo est fixée directement au dos de l'écran qui sera utilisé pour la voir ultérieurement. Cet écran est disposé en lieu et place de la pellicule classique dans le fond de l'appareil photo qui comprend :

(a) un objectif photographique classique 13 monté sur une glissière horizontale 15,
(b) et un obturateur permettant des ouvertures successives multiples de l'objectif.

Pour chaque prise de vue successive, l'objectif est décalé le long de sa glissière horizontale. Les portions d'images élémentaires correspondant à un point de vue sont alors projetées simultanément lors de chaque ouverture de l'obturateur.

Dans une solution préférée, la pellicule photo n'est pas autre chose que les composants chimiques déposés directement sur la face arrière de l'écran selon l'invention, et ces composants sont du type à développement instantané (par exemple comme ceux produits par la marque Polaroïd).

Il est aussi possible de disposer comme dispositif d'acquisition d'images, en lieu et place de la pellicule photographique située sur la face arrière de l'écran selon l'invention, un ensemble de capteurs photoélectriques comme ceux utilisés pour les caméras de télévision.

Tout au long de cette description,

- l'on a décrit la lentille élémentaire 1 comme étant une lentille, mais l'homme de l'art peut remplacer cet élément par tout type d'objectif ayant des fonctions similaires ;
- l'on a décrit l'écran comme plane, et l'ensemble des images élémentaires 2 comme assemblées sur un plan parallèle au plan de l'écran. L'homme de l'art peut réaliser des écrans de toutes formes, par exemple des sphères, des cylindres, ou des formes libres, à la seule condition de calculer en conséquence les caractéristiques optiques de chaque dispositif élémentaire ;
- et l'on a décrit les images élémentaires 2 comme disposées de façon fixe par rapport aux lentilles élémentaires 1, mais il peut être intéressant au contraire d'organiser le déplacement horizontal de l'ensemble des images élémentaires 2 par rapport à l'ensemble des lentilles élémentaires 1, sans que lesdites images élémentaires 2 changent de plan. Ce mouvement, dont l'amplitude optimale est égal à la largeur (1) d'une image élémentaire, permet à un spectateur de voir l'ensemble des images produites par l'écran selon l'invention, sans avoir à se déplacer.

Les images élémentaires peuvent être de toutes natures. Il peut s'agir par exemple :

- d'images imprimées sur un support comme une feuille de papier

ou sur la plaque de lentilles proprement dite,

- ou bien d'images électroniques (écran d'ordinateur ou de téléviseur),
- ou encore d'images projetées par un projecteur sur la face arrière de l'écran.

Les applications de la présente invention concernent principalement :

- la publicité :

  - panneaux d'affichage offrant successivement aux spectateurs des centaines ou des milliers d'affiches virtuelles différentes selon l'emplacement de chacun, pour permettre le partage d'un même espace publicitaire entre différents annonceurs,
  - panneaux offrant au spectateur une animation de type cinématographique lorsqu'il se déplace dans la zone de visibilité optimale (couloirs piétonniers - tunnels utilisés par les automobiles, les trains et les métros,
  - cages d'ascenseurs - parois d'escaliers automatiques et de tapis roulants- etc.),
  - enseignes lumineuses ou non de points de vente, fixes ou mobiles (rotatives par exemple),
  - panneaux publicitaires situés sur les flancs des autobus, des taxis, des trains,
  - réalisation d'objets publicitaires et de gadgets,

- la décoration :

  - points de vente (façades, vitrines, décoration intérieure), stands pour expositions,
  - posters (fenêtres virtuelles - statues virtuelles - images diverses produites en série),
  - éléments de décoration et bricolage (carrelages de salles de bains et de cuisine, motifs de décoration),
  - objets divers (objets non plans : lampes, bibelots, vaisselle, etc.),

- les jeux et jouets,
- les parcs de loisirs :

  - nouvelles animations donnant l'illusion aux spectateurs de naviguer dans un environnement visuel virtuel en trois dimensions tout en étant transportés par un wagonnet leur procurant ou non des sensations physiques liées à la variation de la force s'appliquant à leur corps,
  - labyrinthes,

- l'éducation (planches explicatives en trois dimensions),
- les terminaux des postes de travail de création assistée par ordinateur (architecture - bureaux d'étude de création industrielle),
- l'imagerie médicale (radiographies 3D - RMN - scanner - échographie),
- les systèmes d'analyse de mouvement (ingénieurs, sportifs),
- la photographie personnelle (réalisation de statues virtuelles de personnes ou d'objets),
- la photographie aérienne :

  - cartographie,
  - photographie de maisons et de sites remarquables,

- les cartes postales,
- la signalisation :

  - signalisation routière,
  - signalisation des bureaux et des bâtiments publics,
  - feux de signalisation des automobiles, autocollants apposés à l'arrière des automobiles, permettant au conducteur suivant d'apprécier sa distance à cette automobile,

**Revendications**

1. Ecran pour la vision d'images animées ou en relief comportant une pluralité de dispositifs optiques dits «dispositifs élémentaires» juxtaposés, lesdits dispositifs élémentaires comprenant chacun :

   - une lentille élémentaire (1),
   - et une image élémentaire (2), située dans un plan (3) en vis-à-vis de ladite lentille élémentaire (1), ladite image élémentaire (2) étant constituée d'un ensemble de points (2a, 2b, 2c et suivants) dits pixels juxtaposés selon la largeur de l'image élémentaire et qui peuvent être vus à travers ladite lentille élémentaire (1) par un spectateur situé dans un domaine de visibilité (4) de l'écran, le spectateur voyant un ou plusieurs pixel(s) différent(s) selon sa position par rapport à la lentille élémentaire (1), de telle sorte qu'il puisse voir un grand nombre d'images différentes lors de son déplacement selon un axe (9) horizontal,

   **caractérisé par le fait :**

   - **que** ladite lentille élémentaire (1) est un système optique centré,
   - **que** la forme de ladite image élémentaire (2) a une hauteur moyenne inférieure à la projection orthogonale de ladite lentille élémentaire (1) sur le plan (3) contenant les images élémentaires (2), et une largeur moyenne supérieure à la projection orthogonale de ladite lentille élémentaire (1) sur ledit plan (3), ce qui a pour effet qu'une partie de l'image élémentaire (2) est située en vis-à-vis d'une partie d'une lentille élémentaire immédiatement voisine horizontalement de la lentille élémentaire (1) considérée,
   - et **que** deux images élémentaires (2a, 2b) situées en vis-à-vis de deux lentilles élémentaires (1a, 1b) immédiatement voisines horizontalement sont décalées en hauteur l'une par rapport à l'autre de la hauteur d'une image élémentaire (2) afin de ne pas se chevaucher,

   étant précisé que l'on entend ci-avant et ci-après par hauteur et par largeur des mesures faites respectivement selon deux axes quelconques perpendiculaires entre eux, dits respectivement "axe vertical" et "axe horizontal", situés tous les deux dans le plan de l'écran, aucun de ces axes n'étant obligatoirement vertical ou horizontal par rapport à la terre.

2. Ecran selon la revendication 1, **caractérisé par le fait que** l'axe dit horizontal est essentiellement parallèle à une direction de déplacement (9) du spectateur dans le domaine (4) de visibilité du spectateur.

3. Ecran selon la revendication 1 ou la revendication 2, **caractérisé par le fait que** les lentilles élémentaires (1) sont des lentilles en forme d'hexagone régulier, chaque lentille étant accolée sur ses six côtés à une autre lentille, les lignes de lentilles étant inclinées d'un angle de 0.33 radians par rapport à l'axe horizontal dans un plan parallèle au plan de l'écran.

4. Ecran selon l'une quelconque des revendications 1 à 3, **caractérisé par le fait que** chacune des lentilles élémentaires (1) constituant un système dioptrique centré (5) est associée à un prisme (6).

5. Ecran selon la revendication 4, **caractérisé par le fait que** les lentilles élémentaires (1a, 1b) immédiatement voisines horizontalement ne sont pas décalées verticalement l'une par rapport à l'autre, et que les prismes (6) associés aux lentilles élémentaires (1a, 1b) dévient les rayons lumineux de telle sorte que les points des deux images élémentaires (2a et 2b) correspondantes sont vus par le spectateur à travers les deux lentilles élémentaires (1a et 1b) considérées.

6. Ecran selon l'une quelconque des revendications 1 à 5, **caractérisé par le fait que** les axes optiques de deux lentilles élémentaires (1a et 1b) juxtaposées horizontalement sont décalés verticalement de telle sorte que les points des deux images élémentaires (2a et 2b) correspondantes sont vus par le spectateur à travers les deux lentilles élémentaires (1a et 1b) considérées.

7. Ecran selon l'une quelconque des revendications 1 à 6, **caractérisé par le fait qu'**une lentille élémentaire (1) est munie d'un système de prisme (8) déviant les rayons lumineux vers les spectateurs qui ne sont pas situés en vis-à-vis de ladite lentille élémentaire (1).

8. Ecran selon l'une quelconque des revendications 1 à 7, **caractérisé par le fait que** chaque image élémentaire (2) d'abscisse x et d'ordonnée y comporte, d'un bord latéral à l'autre et dans l'ordre :

(a) un ensemble de points copiés d'un sous-ensemble d'abscisse x et d'ordonnée y d'une image dite image primaire de rang n,

(b) un ensemble de points copiés d'un sous-ensemble d'abscisse x et d'ordonnée y d'une image dite image primaire de rang n+1,

(c) et ainsi de suite,

étant précisé que l'on entend ci-avant et ci-après par images primaires les images que l'on souhaite montrer successivement au spectateur lorsqu'il se déplace le long de l'écran et que l'on entend ci-avant et ci-après par "rang n d'une image primaire" l'ordre chronologique dans lequel ladite image primaire doit être vue par le spectateur se déplaçant le long de l'écran.

9. Ecran selon la revendication 8, **caractérisé par le fait que** les images dites images primaires servant à réaliser les images élémentaires (2) sont créées par une caméra décrivant pendant l'enregistrement desdites images primaires une trajectoire dont l'axe est sensiblement différent d'une parallèle à l'axe de l'objectif de la caméra.

10. Ecran selon la revendication 9, **caractérisé par le fait que** la caméra est fixe, et que le sujet à filmer est situé sur un plateau tournant.

11. Ecran selon l'une quelconque des revendications 1 à 10, **caractérisé par le fait que** les lentilles élémentaires (1) sont des lentilles de Fresnel.

12. Ecran selon l'une quelconque des revendications 1 à 11, **caractérisé par le fait que** la face des lentilles élémentaires (1) située du côté du spectateur est plane et confondue avec la face de l'écran située du côté du spectateur.

13. Ecran selon l'une quelconque des revendications 1 à 12, **caractérisé par le fait que** les lentilles élémentaires (1) appartiennent à des plaques de matériau transparent moulées comprenant chacune un grand nombre de lentilles élémentaires.

14. Ecran selon la revendication 13, **caractérisé par le fait que** les lentilles élémentaires comportent une lentille (5) dont une face plane est située du côté opposé au spectateur, cette face étant située dans un plan dit plan unique, identique pour toutes les lentilles élémentaires, et qu'une plaque transparente (12) de caractéristiques optiques différentes est collée aux lentilles (5), le plan de collage étant ledit plan unique, et les images élémentaires étant apposées directement sur la face arrière (3) de ladite plaque transparente (12).

15. Système de prise d'images comportant un écran selon l'une quelconque des revendications 1 à 14, **caractérisé par le fait que** l'écran comporte un dispositif d'acquisition d'images, par exemple un ensemble de capteurs photoélectriques ou une pellicule photographique, en lieu et place de l'ensemble des images élémentaires (3), et est situé sur la face arrière d'un appareil de prises de vues comportant :

(a) un objectif photographique classique (13) monté sur une glissière horizontale (15),

(b) et un obturateur permettant des ouvertures successives multiples de l'objectif.

## Patentansprüche

1. Bildschirm zur Anzeige von animierten oder räumlichen Bildern, der mehrere optische Vorrichtungen, die als "elementare Vorrichtungen" bezeichnet werden, nebeneinander liegend aufweist, wobei die elementaren Vorrichtungen jeweils umfassen:

- eine elementare Linse (1),
- ein elementares Bild (2), das in einer Ebene (3) gegenüber der elementaren Linse (1) angeordnet ist, wobei das elementare Bild (2) aus einer Gruppe von Punkten (2a, 2b, 2c und folgenden) besteht, die als Pixel bezeichnet werden und entlang der Breite des elementaren Bildes nebeneinander liegen und die durch die elementare Linse (1) von einem Betrachter gesehen werden können, der sich in einem Sichtbereich (4) des Bildschirmes befindet, wobei der Betrachter ein oder mehrere unterschiedliche(s) Pixel gemäß seiner Position in Bezug auf die elementare Linse (1) sieht, so daß er eine große Anzahl an unterschiedlichen Bildern sehen kann, wenn er sich gemäß einer horizontalen Achse (9) bewegt,

**dadurch gekennzeichnet, daß**:

- die elementare Linse (1) ein zentriertes optisches System ist,
- die Form des elementaren Elementes (2) eine durchschnittliche Höhe aufweist, die geringer als die orthogonale Projektion der elementaren Linse (1) auf der Ebene (3) ist, welche die elementaren Bilder (2) enthält, und eine durchschnittliche Breite, die größer als die orthogonale Projektion der elementaren Linse (1) auf der Ebene (3) ist, so daß ein Teil des elementaren Bildes (2) gegenüber einem Teil einer elementaren Linse angeordnet ist, der horizontal in unmittelbarer Nähe zur betroffenen elementaren Linse (1) angeordnet ist,
- und daß zwei elementare Bilder (2a, 2b), die gegenüber von zwei horizontal unmittelbar benachbarten elementaren Linsen (1a, 1b) angeordnet sind, zueinander in der Höhe durch die Höhe eines elementaren Bildes (2) versetzt sind, um sich nicht zu überlappen,

wobei in den zuvor gemachten und in den nachfolgend gemachten Angaben unter Höhe und unter Breite Maße zu verstehen sind, die entlang von zwei beliebigen zueinander senkrecht verlaufenden Achsen genommen wurden, die als "vertikale Achse" bzw. als "horizontale Achse" bezeichnet werden und sich beide in der Ebene des Bildschirms befinden, wobei keine der Achsen in Bezug auf die Erde unbedingt vertikal oder horizontal ist.

2. Bildschirm nach Anspruch 1, **dadurch gekennzeichnet, daß** die horizontale Achse im wesentlichen parallel zu einer Bewegungsrichtung (9) des Betrachters in dem Sichtbereich (4) des Betrachters verläuft.

3. Bildschirm nach Anspruch 1 oder Anspruch 2, **dadurch gekennzeichnet, daß** die elementaren Linsen (1) Linsen in regelmäßiger sechseckiger Form sind, wobei jede Linse auf ihren sechs Seiten mit einer anderen Linse verbunden ist, wobei die Linien von Linsen in einem Winkel von 0,33 Radiant in Bezug auf die horizontale Achse in einer Ebene geneigt sind, die zur Bildschirmebene parallel verläuft.

4. Bildschirm nach einem der Ansprüche 1 bis 3, **dadurch gekennzeichnet, daß** jede der elementaren Linsen (1), die ein zentriertes dioptrisches System (5) bildet, einem Prisma (6) zugeordnet ist.

5. Bildschirm nach Anspruch 4, **dadurch gekennzeichnet, daß** die elementaren Linsen (1a, 1b), die horizontal unmittelbar benachbart sind, nicht zueinander vertikal versetzt sind, und daß die Prismen (6), die den elementaren Linsen (1a, 1b) zugeordnet sind, die Lichtstrahle derart ablenken, daß die Punkte der zwei entsprechenden elementaren Bilder (2a und 2b) von dem Betrachter durch die zwei betroffenen elementaren Linsen (1a und 1b) gesehen werden.

6. Bildschirm nach einem der Ansprüche 1 bis 5, **dadurch gekennzeichnet, daß** die optischen Achsen von zwei elementaren Linsen (1a und 1b), die horizontal nebeneinander liegen, vertikal derart versetzt sind, daß die Punkte der zwei entsprechenden elementaren Bilder (2a und 2b) von dem Betrachter durch die zwei betroffenen elementaren Linsen (1a und 1b) gesehen werden.

7. Bildschirm nach einem der Ansprüche 1 bis 6, **dadurch gekennzeichnet, daß** eine elementare Linse (1) mit einem Prismensystem (8) versehen ist, das die Lichtstrahlen zu Betrachtern hin ablenkt, die nicht gegenüber der elementaren Linse (1) angeordnet sind.

8. Bildschirm nach einem der Ansprüche 1 bis 7, **dadurch gekennzeichnet, daß** jedes elementare Bild (2) der Abszisse x und der Ordinate y von einem Seitenrand zum anderen und in folgender Reihenfolge umfaßt:

(a) eine Gruppe von kopierten Punkten einer Untereinheit der Abszisse x und Ordinate y eines Bildes, das als Primärbild des Rangs n bezeichnet wird,
(b) eine Gruppe von kopierten Punkten einer Untereinheit der Abszisse x und Ordinate y eines Bildes, das als Primärbild des Rangs n+1 bezeichnet wird,
(c) und so weiter,

wobei in den zuvor gemachten und den nachstehend gemachten Angaben unter Primärbildern jene Bilder zu verstehen sind, welche nacheinander dem Betrachter gezeigt werden sollen, wenn dieser sich entlang des Bildschirms bewegt, und wobei in den zuvor gemachten und den nachstehend gemachten Angaben unter "Rang n eines Primärbildes" die chronologische Reihenfolge zu verstehen ist, in der das Primärbild von dem Betrachter gesehen werden muß, der sich entlang des Bildschirms bewegt.

**9.** Bildschirm nach Anspruch 8, **dadurch gekennzeichnet, daß** die Bilder, die als Primärbilder bezeichnet werden und dazu dienen, die elementaren Bilder (2) zu erzeugen, durch eine Kamera erzeugt werden, welche während der Aufzeichnung der Primärbilder eine Bahn beschreibt, deren Achse wesentlich von einer Parallele zur Achse des Objektivs der Kamera verschieden ist.

**10.** Bildschirm nach Anspruch 9, **dadurch gekennzeichnet, daß** die Kamera feststehen ist und daß sich das zu filmende Subjekt auf einer drehenden Platte befindet.

**11.** Bildschirm nach einem der Ansprüche 1 bis 10, **dadurch gekennzeichnet, daß** die elementaren Linsen (1) Fresnel-Linsen sind.

**12.** Bildschirm nach einem der Ansprüche 1 bis 11, **dadurch gekennzeichnet, daß** die Fläche der elementaren Linsen (1), welche sich auf der Seite des Betrachters befindet, eben ist und in die Fläche des Bildschirms übergeht, welche sich auf der Seite des Betrachters befindet.

**13.** Bildschirm nach einem der Ansprüche 1 bis 12, **dadurch gekennzeichnet, daß** die elementaren Linsen (1) zu geformten Platten aus transparentem Material gehören, weiche jeweils eine große Anzahl an elementaren Linsen umfassen.

**14.** Bildschirm nach Anspruch 13, **dadurch gekennzeichnet, daß** die elementaren Linsen eine Linse (5) umfassen, bei der eine ebene Fläche auf der Seite, die dem Betrachter gegenüber liegt, angeordnet ist, wobei diese Fläche in einer so genannten einzigartigen Ebene angeordnet ist, die für alle elementaren Linsen identisch ist, und daß eine transparente Platte (12) mit unterschiedlichen optischen Eigenschaften an die Linsen (5) geklebt ist, wobei die Klebe-Ebene die einzigartige Ebene ist, und wobei die elementaren Bilder direkt auf der hinteren Fläche (3) der transparenten Platte (12) angeordnet sind.

**15.** System zum Aufnehmen von Bildern, welches einen Bildschirm nach einem der Ansprüche 1 bis 14 umfaßt, **dadurch gekennzeichnet, daß** der Bildschirm eine Bildaufnahmevorrichtung umfaßt, zum Beispiel eine Gruppe von fotoelektrischen Fühlern oder einen fotografischen Film, anstatt der Gruppe der elementaren Bilder (3) und auf der Rückseite einer Vorrichtung zur Aufnahme von Ansichten angeordnet ist, die umfaßt:

(a) ein klassisches fotografisches Objektiv (13), das auf einer horizontalen Gleitführung (15) befestigt ist,
(b) und einen Verschluß, der mehrere aufeinanderfolgende Öffnungen des Objektivs ermöglicht.

**Claims**

**1.** A screen to view animated images or images in relief comprising a plurality of juxtaposed optical devices referred to as "elementary devices", each of said elementary devices comprising:

- an elementary lens (1); and
- an elementary image (2) situated in a plane (3) in register with said elementary lens (1), said elementary image (2) being made up of a set of points (2a, 2b, 2c et seq.) referred to as "pixels" that are juxtaposed according to the width of the elementary image and that may be seen through said elementary lens (1) by a spectator situated in a viewing range (4) of the screen, the spectator seeing one or more different pixel(s) depending on his position relative to the elementary lens (1) such that he may see a large number of different images when moving along a horizontal axis (9);

**characterised by** the fact:

- that said elementary lens (1) is a centred optical system,
- that the shape of said elementary image (2) is of mean height smaller than the orthogonal projection of said elementary lens (1) onto the plane (3) containing the elementary images (1), and of mean width greater than the orthogonal projection of said elementary lens (1) onto said plane (3), thus having the effect that a portion of the elementary image (2) is situated in register with a portion of an elementary lens that is immediately horizontally adjacent to the elementary lens (1) under consideration; and
- that two elementary images (2a, 2b) situated in register with two elementary lenses (1a, 1b) that are immediately horizontally adjacent are offset in height relative to each other from the height of an elementary image (2) so as to avoid overlapping;

it being specified that the terms "height" and width" as used above and below relate to measurements made along respective ones of two arbitrary perpendicular axes referred to as the "vertical" axis and as the "horizontal" axis, both situated in the plane of the screen, neither of these axes necessarily being vertical or horizontal relative to the earth.

2. A screen according to claim 1, **characterised by** the fact that the axis referred to as the "horizontal axis" is essentially parallel to a displacement direction (9) of the spectator in the viewing range (4) of the spectator.

3. A screen according to claim 1 or claim 2, **characterised by** the fact that the elementary lenses (1) are lenses in the form of regular hexagons, each lens touching another lens on all six sides, the rows of lenses being inclined at an angle of 0.33 radians relative to the horizontal axis in a plane parallel to the plane of the screen.

4. A screen according to any one of claims 1 to 3, **characterised by** the fact that each elementary lens (1) constituting a centred lenticular system (5) is associated with a prism (6).

5. A screen according to claim 4, **characterised by** the fact that the immediately horizontally adjacent elementary lenses (1a and 1b) are not offset vertically relative to one another, and that the prisms (6) associated with the elementary lenses (1a and 1b) deflect the light rays in such a manner that corresponding points of the two elementary images (2a and 2b) are seen by the spectator through the two elementary lenses (1a and 1b) under consideration.

6. A screen according to any one of claims 1 to 5, **characterised by** the fact that the optical axes of two horizontally juxtaposed elementary lenses (1a and 1b) are offset vertically in such a manner that corresponding points of two elementary images (2a and 2b) are seen by the spectator through the two elementary lenses (1a and 1b) under consideration.

7. A screen according to any one of claims 1 to 6, **characterised by** the fact that each elementary lens (1) is provided with a prism system (8) deflecting light rays towards spectators not situated in register with said elementary lens (1).

8. A screen according to any one of claims 1 to 7, **characterised by** the fact that each elementary image (2), of abscissa x and of ordinate y comprises, from one side edge to the other, and in order:

    (a) a set of points copied from a subset, of abscissa x and of ordinate y, of the primary image of rank n;
    (b) a set of points copied from a subset, of abscissa x and of ordinate y, of the primary image of rank n+1; and
    (c) so on;

it being specified that the term "primary images" is used above and below to designate the images that are to be shown in succession to a spectator moving along the screen, and that the term "rank n of a primary image" is used above and below to designate the chronological order in which said primary image is to be seen by the spectator moving along the screen;

9. A screen according to claim 8, **characterised by** the fact that the "primary" images serving to make the elementary images (2) are created by a motion picture camera which, while recording said primary images, describes a trajectory whose axis is substantially different from an axis parallel to the axis of the camera lens.

10. A screen according to claim 9, **characterised by** the fact that the camera is stationary and that the subject to be filmed is situated on a turntable.

11. A screen according to any one of claims 1 to 10, **characterised by** the fact that the elementary lenses (1) are Fresnel lenses.

12. A screen according to any one of claims 1 to 11, **characterised by** the fact that the faces of the elementary lenses (1) situated on the same side as the spectator are plane and together they constitute the face of the screen situated on the same side as the spectator.

13. A screen according to any one of claims 1 to 12, **characterised by** the fact that the elementary lenses (1) are moulded plates of transparent material, each comprising a large number of elementary lenses.

**14.** A screen according to claim 13, **characterised by** the fact that each elementary lens comprises a lens (5) having a plane face situated on its side remote from the spectator, said face being situated in a unique plane which is identical for all of the elementary lenses, and that a transparent plate (12) having different optical characteristics is stuck to the lenses (5), adhesion taking place in the said unique plane, and the elementary images being applied directly to a rear face (3) of said transparent plate (12).

**15.** A system for taking pictures comprising a screen according to any one of claims 1 to 14, **characterised by** the fact that the screen includes an image acquisition device, e.g. a set of photoelectric sensors or a photographic film, replacing the set of elementary images (3), and is situated on the rear face of a camera, comprising:

    (a) a conventional photographic lens (13) mounted on a horizontal slideway (15); and
    (b) a shutter enabling the lens to make multiple successive exposures.

## fig 1

## fig 2

## fig 3

## fig 4

## fig 5

2a 2b 2c 2d 2e

## fig 6

1a 1b 1c 1d 1e

## fig 7

2a 2b 2c 2d 2e

## fig 8

1a 1b 1c 1d 1e

fig 9

2a 2b 2c 2d 2e

fig 10

1a 1b 1c 1d 1e

fig 11

11c
11b
11 a

3

1a 1b 1c

fig 12

3

12

1a
1b
1c

**fig 13**

**fig 14**

**fig 15**

**fig 16**

fig 17

fig 18

fig 20

fig 19